# EUROPEAN PATENT APPLICATION

(11) **EP 3 766 837 A1**
(43) Date of publication of application: **20.01.2021**
(21) Application number: 19768665.2
(22) Date of filing: 12.03.2019
(51) Int. Cl.: C01G 23/00, H01M 4/36, H01M 4/485, H01M 4/38

(54) **LITHIUM TITANIUM COMPOSITE OXIDE COMPRISING ALUMINUM-COATED PRIMARY PARTICLES AND MANUFACTURING METHOD THEREFOR**

(30) Priority: 12.03.2018 KR 20180028828
(71) Applicant: POSCO Chemical Co., Ltd, Gyeongsangbuk-do 37918 (KR)
(72) Inventor: CHOI, Su Bong, Gumi-Si, Gyeongsangbuk-do 39178 (KR); KANG, Chun Gu, Seoul 03906 (KR); KIM, Jeong Han, Gumi-Si, Gyeongsangbuk-do 39184 (KR); LEE, Jae An, Gumi-Si, Gyeongsangbuk-do 39205 (KR)
(74) Representative: LLR
(86) International application number: PCT/KR2019/002821
(87) International publication number: WO 2019/177328

(57) **Abstract**

The present disclosure relates to a lithium titanium composite oxide including aluminum-coated primary particles and to a method for manufacturing the same.

A lithium titanium composite oxide including aluminum-coated primary particles according to an embodiment is manufactured as the primary particles are coated with aluminum by mixing an aluminum compound with particles re-pulverized after preparation of a lithium titanium oxide and then by spray-drying the mixture again to prepare secondary particles, and a battery including the lithium titanium composite oxide including the aluminum-coated primary particles according to an embodiment exhibits effects of suppressing electrolyte decomposition and gas generation that may be respectively caused by titanium ions and residual lithium in conventional lithium titanium composite oxides.

## Description

### TECHNICAL FIELD

Embodiments of the present disclosure relates to a lithium titanium composite oxide including aluminum-coated primary particles and to a method for manufacturing the same.

### DISCUSSION OF RELATED ART

Various properties for non-aqueous electrolyte batteries are required according to the use of the batteries. For example, when a non-aqueous electrolyte battery is used in a digital camera, discharge is expected at a current less than about 3 C, and when it is used in a vehicle such as a hybrid electric vehicle, discharge is expected at a current less than at least about 10 C. In view of such situation, high current characteristics are particularly necessary for the non-aqueous electrolyte battery used in the above-described technical field.

Currently, most of commercially available lithium secondary batteries use carbon materials as cathode materials, but it is difficult to use carbon in vehicles, for which safety is the top priority, because, for example, carbon is unstable to heat, has low compatibility with electrolytes, and easily forms dendrites on electrode surfaces, even though it has excellent electron conductivity and high capacity. For this reason, lithium titanium oxide (LTO) is being widely studied as a cathode material to replace carbon. LTO has advantageous properties in high-speed and low-temperature operating conditions since LTO has excellent structural stability as there is little change in volume during charge and discharge and does not form dendrites even when overcharged due to its relatively high electric potential of 1.5 V (vs Li⁺/Li), and there is no safety issue such as decomposing the electrolyte.

Such a lithium titanium oxide (Li₄Ti₅O₁₂, LTO) material has a disadvantage in that its operating voltage is 1.3 ∼ 1.6 V, which is higher than that of conventional carbon-based cathode materials, and its reversible capacity is about 170 mAh/g, which is relatively small, but LTO has advantages in that it is capable of high speed charge and discharge, irreversible reaction hardly exists (95 % or more of initial efficiency), and reaction heat is significantly low, which makes it highly safe. In addition, a theoretical density of the carbon material is about 2 g/cm³, which is relatively low, but Li₄Ti₅O₁₂ has a high theoretical density of about 3.5 g/cm3, so the capacity per volume is similar to that of carbon materials.

Examples of a method for manufacturing such LTO may include a solid state method, a quasi-solid state method, and a sol-gel method, and among them, the quasi-solid state method is a method of manufacturing LTO by mixing solid reaction ingredients and then slurring them, but the quasi-solid state method has disadvantages in that the manufacturing process is complicated since it includes multiple processes such as drying, first pulverizing, heat treatment and second pulverizing, and if each process step is not properly controlled, it is difficult to manufacture LTO with desired physical properties, and it is difficult to remove impurities from LTO.

In such a case, LiOH and/or Li₂CO₃ are used as the lithium compound. However, when such a lithium compound is used, there is a problem that an amount of residual lithium present in the form of LiOH or Li₂CO₃ on a surface of an anode active material is large.

Such residual lithium, that is, unreacted LiOH and Li₂CO₃, reacts with an electrolyte in the battery, causing gas generation and swelling, such that a problem of significant degradation in high-temperature stability may occur.

In addition, it has become a problem in recent years that Ti in LTO reacts with the electrolyte to generate gas through the following path.

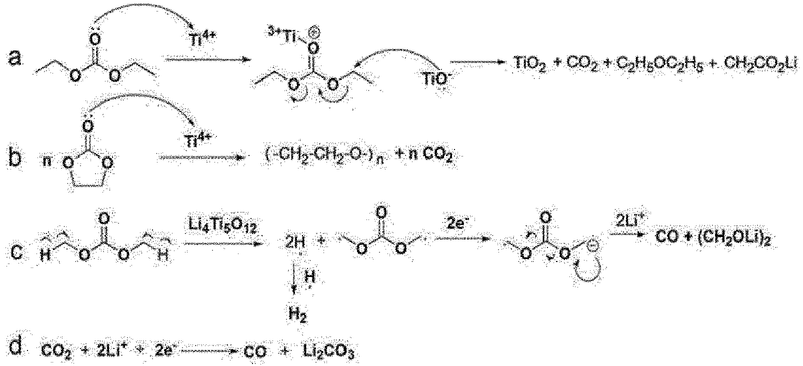

### SUMMARY

Aspects of embodiments of the present disclosure may be directed to a lithium titanium composite oxide including aluminum-coated primary particles, having a novel structure capable of effectively controlling gas generation by coating primary particles of the lithium titanium composite oxide with dissimilar metals.

Aspects of embodiments of the present disclosure may also be directed to a method for manufacturing the lithium titanium composite oxide including aluminum-coated primary particles according to an embodiment.

According to an embodiment, a lithium titanium composite oxide including aluminum-coated primary particles is provided.

In some embodiments, the lithium titanium composite oxide may be a secondary particle formed by agglomeration of a plurality of primary particles, and a size of the secondary particle may be in a range from 7 to 20 µm.

In some embodiments, the lithium titanium composite oxide may have a residual lithium in an amount less than or substantially equal to 2,000 ppm.

In a battery, residual lithium, that is, unreacted LiOH and Li₂CO₃, reacts with an electrolyte and causes gas generation and swelling, thus leading to a problem of significant degradation in high-temperature stability. However, since the lithium titanium composite oxide including aluminum-coated primary particles according to some embodiments of the present disclosure reduces an amount of gas generation in the battery by reducing the residual lithium, such that the high-temperature stability may also be improved (see Table 11 below).

In some embodiments, the lithium titanium composite oxide may have an intensity of a rutile-type titanium dioxide peak within 3 % with respect to an LTO main peak and an intensity of an anatase-type titanium dioxide peak within 1 % with respect to an LTO main peak.

In some embodiments, particle size distribution of the lithium titanium composite oxide varies according to application of ultrasonic waves.

In some embodiments, a secondary particle of the lithium titanium composite oxide is changed into a primary particle during manufacturing of an electrode.

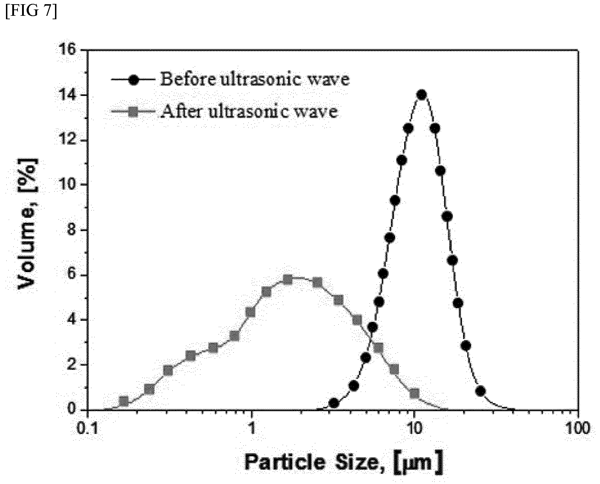

According to an experimental example of the present disclosure, in order to analyze the particle size of the lithium titanium composite oxide coated with aluminum, ultrasonic waves were applied to identify changes in the particle size according to the application of ultrasonic waves, and it was appreciated that the particle size decreases after application of ultrasonic waves as compared to the case before the application of ultrasonic waves. These results suggest that when an electrode is manufactured using the lithium titanium composite oxide according to an embodiment, the lithium titanium composite oxide is changed in its form into a primary particle, rather than a secondary particle, thereby improving the electrochemical properties of a battery (see FIG. 7).

According to an embodiment, an electrode for a lithium secondary battery, including the lithium titanium composite oxide according to an embodiment, is provided.

In some embodiments, the electrode for a lithium secondary battery including the lithium titanium composite oxide is characterized in including primary particles, pulverized from the secondary particle of the lithium titanium composite oxide, which have a D50 in a range from 1.0 to 4.0 µm.

According to another embodiment, a method for manufacturing a lithium titanium composite oxide including aluminum-coated primary particles includes:
i) mixing, in a solid state, a lithium-containing compound, a titanium oxide, and a dissimilar metal compound in a stoichiometric ratio;
ii) manufacturing a slurry by dispersing the solid mixture of i) in a solvent and performing wet pulverizing until particles having an average particle diameter in a range from 0.1 µm to 0.2 µm are formed;
iii) spray-drying the slurry to form particles;
iv) plasticizing the spray-dried particles;
v) pulverizing the plasticized particles;
vi) manufacturing a slurry by dispersing a mixture of the pulverized particles and an aluminum compound in a solvent and pulverizing the dispersed mixture;
vii) performing spray-drying; and
viii) performing heat treatment

In some embodiments, in the method for manufacturing a lithium titanium composite oxide including aluminum-coated primary particles, the dissimilar metal compound may be a zirconium compound.

In some embodiments, in the method for manufacturing a lithium titanium composite oxide including aluminum-coated primary particles, the aluminum compound may be an aluminum sulfate.

In some embodiments, in the method for manufacturing a lithium titanium composite oxide including aluminum-coated primary particles, in plasticizing the spray-dried particles, heat treatment may be performed for 10 to 20 hours at a temperature in a range from 700 to 800°C.

In some embodiments, in the method for manufacturing a lithium titanium composite oxide including aluminum-coated primary particles, in performing heat treatment, heat treatment may be performed for 10 to 20 hours at a temperature in a range from 400 to 500°C.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 illustrates results of measuring changes in particle size according to a wet pulverizing time.
FIG. 2 illustrates results of measuring SEM images of a lithium titanium composite oxide before plasticizing.
FIG. 3 illustrates results of measuring SEM images of the lithium titanium composite oxide after plasticizing.
FIG. 4 illustrates results of measuring SEM images of a cross-section of the lithium titanium composite oxide after plasticizing.
FIG. 5 illustrates results of measuring SEM images of the lithium titanium composite oxide that is pulverized after plasticizing.
FIG. 6 illustrates SEM images of an electrode formed of the lithium titanium composite oxide according to an embodiment of the present disclosure.
FIG. 7 illustrates results of measuring changes in particle size according to the presence or absence of ultrasound after plasticizing the lithium titanium composite oxide manufactured according to an experimental example of an embodiment of the present disclosure.

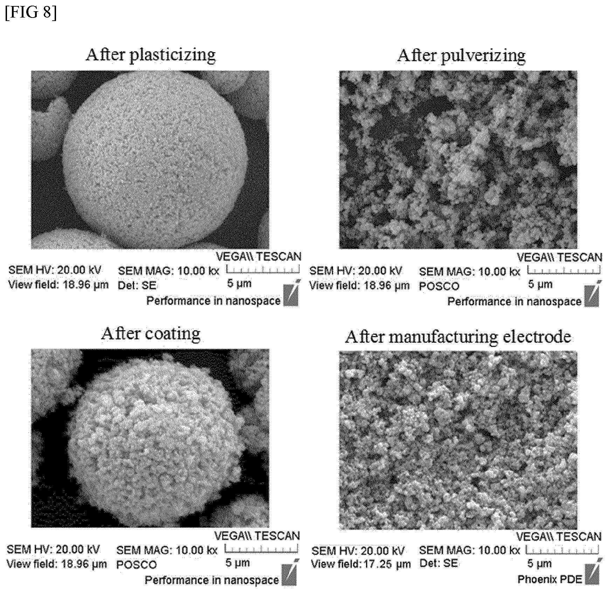

FIG. 8 illustrates SEM images of lithium titanium composite oxide particles of an embodiment of the present disclosure.

### DETAILED DESCRIPTION

Hereinafter, embodiments the present disclosure will be described in more detail. However, the present invention is not limited by the following embodiments.

### <Embodiment 1> Preparation of lithium titanium composite oxide

Herein, 1 mol of lithium carbonate and 1 mol of anatase-type titanium oxide, as starting materials, and 1 mol of zirconium hydroxide were mixed in solid states and dissolved in water while stirring. Then, the dissolved product was wet pulverized (e.g., wet ground or finely wet ground) at 3000 rpm using zirconia beads, spray-dried with a hot air at a temperature of 250°C and an exhaust hot air at a temperature of 110°C, and heat-treated for 10 to 20 hours in an atmosphere at 700 to 800°C, such that a lithium titanium composite oxide doped with Zr as a dissimilar metal was manufactured.

### <Experimental Example> Measuring particle size according to wet pulverizing time

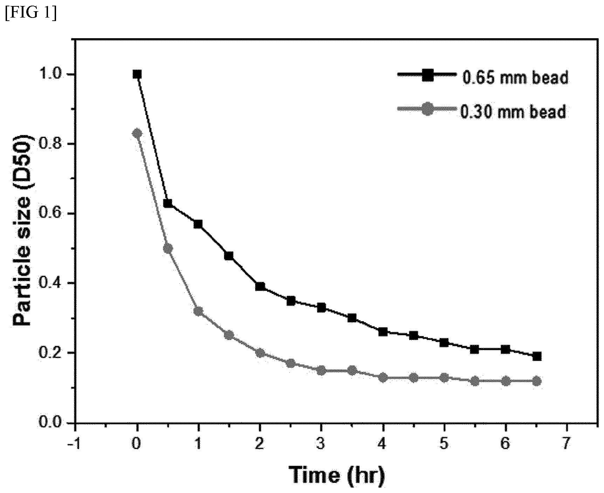

A particle size of a slurry according to the zirconia bead particles used in the wet pulverizing in Embodiment 1 and the wet pulverizing time were measured and shown in FIG. 1.

The slurries were manufactured by varying its particle size through controlling the zirconium and wet pulverizing time, and the particle size of the manufactured slurry and particle size distribution of secondary particles manufactured using the slurry were measured and shown in Table 1 below.

**[Table 1]**

| ITEMS | | UNIT | Particle size measurement | | | | |
|---|---|---|---|---|---|---|---|
| | | | SPL-1 | SPL-2 | SPL-3 | SPL-4 | SPL-5 |
| Slurry particle size distribution | Din | µm | 0.147 | 0.040 | 0.040 | 0.040 | 0.040 |
| | D10 | | 0.287 | 0.101 | 0.089 | 0.078 | 0.057 |
| | D50 | | 0.536 | 0.394 | 0.304 | 0.219 | 0.104 |
| | D90 | | 1.006 | 0.900 | 0.795 | 0.640 | 0.229 |
| | Dam | | 1.622 | 1.660 | 1.445 | 1.445 | 1.413 |
| Particle size distribution | Din | µm | 3.90 | 3.90 | 3.90 | 2.60 | 2.60 |
| | D10 | | 8.78 | 7.29 | 7.33 | 7.89 | 7.69 |
| | D50 | | 13.70 | 13.16 | 13.23 | 14.15 | 13.85 |
| | D90 | | 20.27 | 21.80 | 21.77 | 23.34 | 22.95 |
| | Dam | | 39.23 | 39.23 | 34.26 | 51.47 | 51.47 |

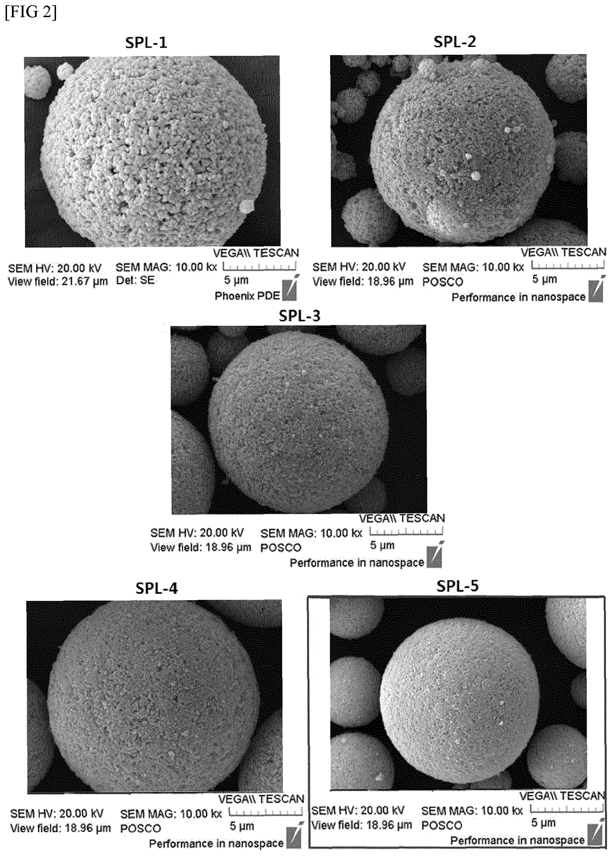

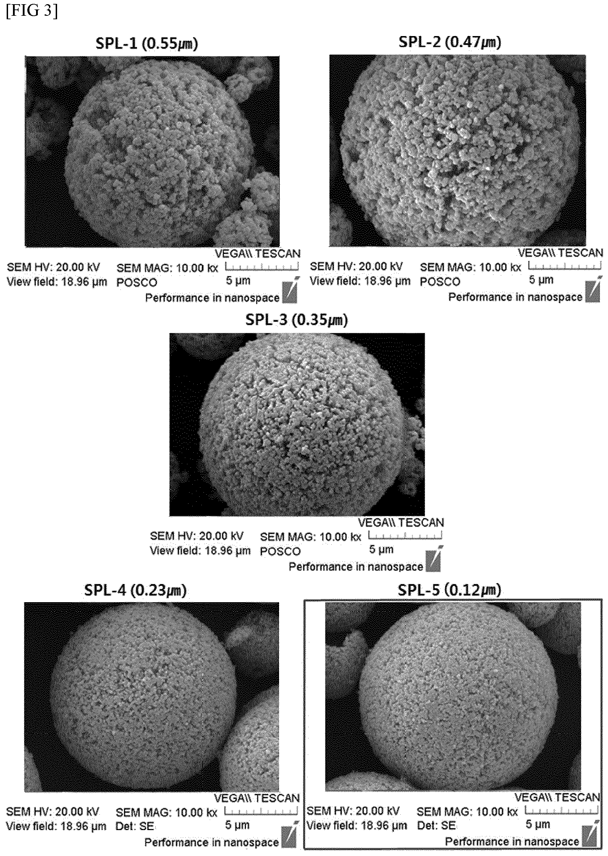

In Embodiment 1, SEM images of the lithium titanium oxide before plasticizing and the lithium titanium oxide after plasticizing were measured, and the results are shown in FIGS. 2 and 3.

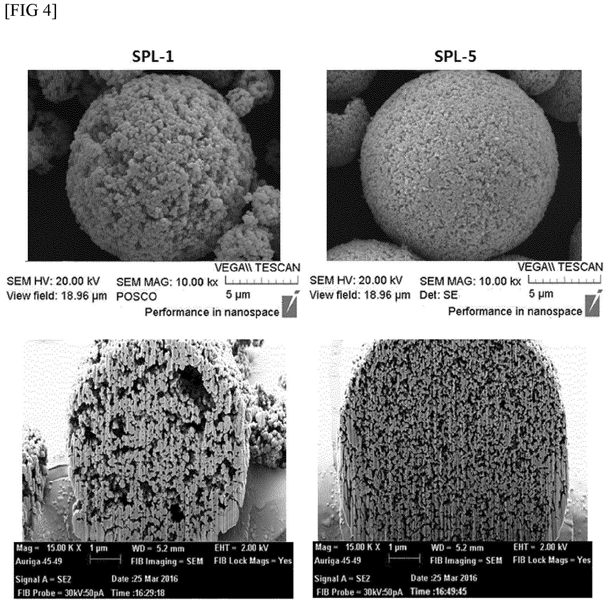

The relationship between the particle size of the slurry manufactured in Embodiment 1 and the particle size of primary particles of an active material manufactured from the slurry was determined and is shown in Table 2 and FIG. 4 below.

It may be appreciated from FIGS. 2 to 4 and Table 2 that a shape and a size of the primary particles in the secondary particles before plasticizing and a shape and a size of the primary particles in the secondary particles after plasticizing were affected by the particle size of the slurry.

**[Table 2]**

| Classification | SPL-1 | SPL-2 | SPL-3 | SPL-4 | SPL-5 |
|---|---|---|---|---|---|
| Slurry particle size | 0.54 | 0.39 | 0.30 | 0.22 | 0.10 |
| Primary particle size | 0.55 | 0.47 | 0.35 | 0.23 | 0.12 |

### <Experimental Example> SEM measurement of particle cross-section

SEM images of a cross-section of the plasticized lithium titanium oxide manufactured in Embodiment 1 were measured, and the results are shown in FIG. 4.

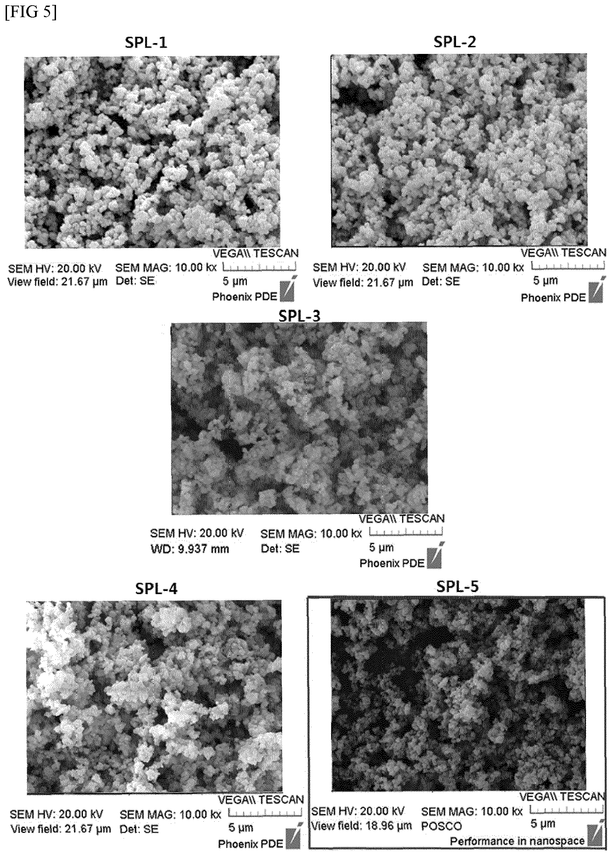

In FIG. 5, it may be appreciated that in the case of SPL-5 where the particle size of the slurry is 0.1, as compared to the case of SPL-1 where the particle size of the slurry is 0.54, particles are uniformly mixed as the particle size of the primary particles is substantially minimized, and thus pores that are formed as carbon dioxide escapes during heat treatment are formed significantly uniformly.

### <Embodiment 2> Pulverized into primary particles

The lithium titanium composite oxides SP-1 to SP-5 manufactured in Embodiment 1 were pulverized.

The particle size distribution after pulverizing was measured for each particle of SP-1 to SP-5 and shown in Table 3 below.

**[Table 3]**

| ITEMS | | UNIT | Pulverized particle size after plasticizing according to slurry particle size | | | | |
|---|---|---|---|---|---|---|---|
| | | | SPL-1 | SPL-2 | SPL-3 | SPL-4 | SPL-5 |
| Particle size distribution (Slurry) | Din | µm | 0.147 | 0.040 | 0.040 | 0.040 | 0.040 |
| | D10 | | 0.287 | 0.101 | 0.089 | 0.078 | 0.057 |
| | D50 | | 0.536 | 0.394 | 0.304 | 0.219 | 0.104 |
| | D90 | | 1.006 | 0.900 | 0.795 | 0.640 | 0.229 |
| | Dam | | 1.622 | 1.660 | 1.445 | 1.445 | 1.413 |
| Particle size distribution | Din | µm | 0.23 | 0.23 | 0.23 | 0.20 | 0.20 |
| | D10 | | 0.64 | 0.62 | 0.56 | 0.53 | 0.54 |
| | D50 | | 1.73 | 1.69 | 1.65 | 1.52 | 1.36 |
| | D90 | | 4.41 | 4.36 | 4.57 | 4.13 | 3.32 |
| | Dam | | 11.56 | 11.56 | 13.24 | 11.56 | 10.10 |

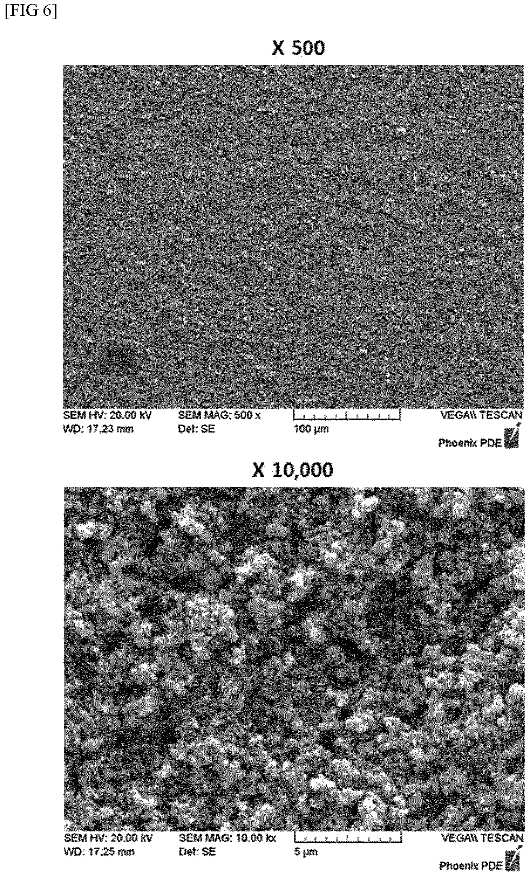

Then, SEM images of the pulverized particles were measured and the results are shown in FIG. 6.

### <Embodiment 3> Preparation of lithium titanium composite oxide in which primary particles are coated with aluminum

Aluminum sulfate, as an aluminum compound, was mixed with the slurry that had been pulverized in Embodiment 2, and the mixed product was mixed with water, as a solvent, and stirred such that the primary particles were coated with aluminum.

Then, the coated product was re-agglomerated into secondary particles by spray-drying it with a hot air at a temperature of 250°C and an exhaust hot air at a temperature of 110°C, and the re-agglomerated product was heat-treated for 10 hours in an atmosphere at 450°C, and thus a lithium titanium composite oxide in which the primary particles were surface-treated with aluminum was manufactured.

### <Experimental Example> Identification of physical properties according to aluminum coating content

Physical properties according to a content of aluminum sulfate coating added in Embodiment 3 were measured and are shown in Table 4 below.

**[Table 4]**

| ITEMS | | UNIT | Heat treatment temperature 400°C | | | |
|---|---|---|---|---|---|---|
| | | | Bare | SPL-1 | SPL-2 | SPL-3 |
| Al Content | | ppm | - | 500 | 700 | 1000 |
| Impurities | Residual Li₂CO₃ | ppm | 2599 | 1251 | 1311 | 1305 |
| Tap Density | | g / ml | 0.51 | 0.58 | 0.59 | 0.57 |
| BET surface area | | m² / g | 6.6 | 6.4 | 6.4 | 6.2 |
| pH | | - | 10.6 | 10.2 | 10.2 | 10.3 |

### <Embodiment 4>

The particles were manufactured in the same manner as in Embodiment 3, except that the heat treatment temperature was adjusted to 450°C, and the results of measuring physical properties are shown in Table 5 below.

**[Table 5]**

| ITEMS | | UNIT | Heat treatment temperature 450°C | | | |
|---|---|---|---|---|---|---|
| | | | Bare | SPL-1 | SPL-2 | SPL-3 |
| Al Content | | ppm | - | 500 | 700 | 1000 |
| Impurities | Residual LiOH | ppm | 69 | 27 | 18 | 34 |
| | Residual Li₂CO₃ | | 2599 | 1180 | 1150 | 1140 |
| Tap Density | | g / ml | 0.51 | 0.61 | 0.61 | 0.62 |
| BET surface area | | m² / g | 6.6 | 6.3 | 6.2 | 6.1 |
| pH | | - | 10.6 | 10.2 | 10.2 | 10.2 |

### <Experimental Example>

The particles were manufactured in the same manner as in Embodiment 3, except that the heat treatment temperature was adjusted to 475°C, and the results of measuring physical properties are shown in Table 6 below.

**[Table 6]**

| ITEMS | | UNIT | Heat treatment temperature 475°C | | | |
|---|---|---|---|---|---|---|
| | | | Bare | SPL-4 | SPL-5 | SPL-6 |
| Al Content | | ppm | - | 500 | 700 | 1000 |
| Impurities | Residual LiOH | ppm | 69 | 31 | 12 | 20 |
| | Residual Li₂CO₃ | | 2599 | 1305 | 1310 | 1235 |
| Tap Density | | g / ml | 0.51 | 0.63 | 0.62 | 0.60 |
| BET surface area | | m² / g | 6.6 | 6.2 | 6.2 | 6.1 |
| pH | | - | 10.6 | 10.3 | 10.3 | 10.3 |

### <ExperimentalExample> Measuring physical properties according to heat treatment temperature

The particles were manufactured in the same manner as in Embodiment 3, except that the heat treatment temperature was adjusted to 500°C, and the results of measuring physical properties are shown in Table 7 below.

**[Table 7]**

| ITEMS | | UNIT) | Heat treatment temperature 500°C | | | |
|---|---|---|---|---|---|---|
| | | | Bare | SPL-7 | SPL-8 | SPL-9 |
| Al Content | | ppm | - | 500 | 700 | 1000 |
| Impurities | Residual LiOH | ppm | 69 | 25 | 17 | 17 |
| | Residual Li₂CO₃ | | 2599 | 1291 | 1293 | 1364 |
| Tap Density | | g / ml | 0.51 | 0.61 | 0.60 | 0.63 |
| BET surface area | | m² / g | 6.6 | 6.2 | 6.1 | 6.0 |
| pH | | - | 10.6 | 10.5 | 10.4 | 10.4 |

### <Experimental Example> Measuring physical properties according to heat treatment temperature

The particles were manufactured in the same manner as in Embodiment 3, except that the heat treatment temperature was adjusted to 525°C, and the results of measuring physical properties are shown in Table 8 below.

**[Table 8]**

| ITEMS | | UNIT | Heat treatment temperature 525°C | | | |
|---|---|---|---|---|---|---|
| | | | Bare | SPL-10 | SPL-11 | SPL-12 |
| Al Content | | ppm | - | 500 | 700 | 1000 |
| Impurities | Residual LiOH | ppm | 69 | 17 | 4 | 10 |
| | Residual Li₂CO₃ | | 2599 | 1500 | 1471 | 1479 |
| Tap Density | | g / ml | 0.51 | 0.62 | 0.61 | 0.60 |
| BET surface area | | m² / g | 6.6 | 6.1 | 6.0 | 5.8 |
| pH | | - | 10.6 | 10.7 | 10.6 | 10.7 |

### <Experimental Example> Measuring physical properties according to heat treatment temperature

The particles were manufactured in the same manner as in Embodiment 3, except that the heat treatment temperature was adjusted to 550°C, and the results of measuring physical properties are shown in Table 9 below.

**[Table 9]**

| ITEMS | | UNIT | Heat treatment temperature 550°C | | | |
|---|---|---|---|---|---|---|
| | | | Bare | SPL-13 | SPL-14 | SPL-15 |
| Al Content | | ppm | - | 500 | 700 | 1000 |
| Impurities | Residual LiOH | ppm | 69 | 28 | 21 | 23 |
| | Residual Li₂CO₃ | | 2599 | 1614 | 1518 | 1462 |
| Tap Density | | g / ml | 0.51 | 0.60 | 0.58 | 0.59 |
| BET surface area | | m² / g | 6.6 | 5.9 | 5.8 | 5.7 |
| pH | | - | 10.6 | 10.7 | 10.7 | 10.7 |

### <Experimental Example> Measuring physical properties according to aluminum content

### <Experimental Example> Measuring amount of gas generation

In the above embodiments, after impregnating the lithium titanium composite oxides including aluminum-coated primary particles in 4 ml of an electrolyte (PC/EMC/DMC=2/2/6, LiPF₆=1.0 M) and storing them at 80°C for 2 weeks, an amount of gas generation was analyzed and shown in Table 10 below.

**[Table 10]**

| Sample | | 2 Weeks | | | |
|---|---|---|---|---|---|
| | | 1 | 2 | 3 | AVE |
| Comparative example Ref.(Bare ) | | 12.5 | 15.0 | 15.0 | 14.2 |
| Al Coating | 500ppm | 11.5 | 12.0 | 12.0 | 11.8 |
| | 700ppm | 10.0 | 11.5 | 11.5 | 11.0 |
| | 1000ppm | 10.0 | 11.0 | 11.5 | 10.8 |

### <Preparation Example> Manufacturing electrode

An electrode and a coin battery were manufactured according to a common manufacturing process known in the art, by using the lithium titanium composite oxide manufactured in the above embodiment as an anode active material, a lithium foil as a counter electrode, a porous polyethylene film (Cellgard LLC, Celgard 2300, thickness: 25 µm) as a separator, and a liquid electrolyte in which LiPF₆ was dissolved at 1 mol concentration in a solvent in which ethylene carbonate and dimethyl carbonate were mixed at a volume ratio of 1:2.

### <Experimental Example> SEM image measurement

Results of measuring SEM images of the manufactured electrode are shown in FIG. 6.

### <Experimental Example> Analysis of changes in particle size of lithium titanium composite oxide in which primary particles are coated with aluminum

After plasticizing the lithium titanium composite oxide, manufactured in an embodiment of the present disclosure, in which the primary particles are coated with aluminum, ultrasonic waves were applied thereto and changes in particles depending on the presence and absence of ultrasonic waves were measured, and the results are shown in FIG. 7 and Table 11.

**[Table 11]**

| Classification | | Dmin | D10 | D50 | D90 | Dmax |
|---|---|---|---|---|---|---|
| AlS Coating | Before ultrasound | 2.60 | 5.93 | 9.90 | 15.65 | 34.25 |
| | After ultrasound | 0.11 | 0.43 | 1.62 | 4.79 | 13.24 |

### <Experimental Example> Measuring electrochemical properties

Electrochemical properties of a battery including the particles manufactured in the above embodiment were measured and are shown in Table 12 below.

**[Table 12]**

| Heat treatment temperature | ITEMS | UNIT | Bare | Al Content 500 | Al Content 700 | Al Content 1000 |
|---|---|---|---|---|---|---|
| 400°C | 0.1C Discharge | mAh / g | 171.1 | 169.7 | 168.2 | 165.9 |
| | 10C / 0.1C | % | 89.5 | 93.2 | 92.6 | 91.2 |
| | 20C / 0.1C | % | 79.3 | 89.4 | 87.5 | 84.8 |
| 450°C | 0.1C Discharge | mAh / g | 171.1 | 168.9 | 167.4 | 165.8 |
| | 10C / 0.1C | % | 89.5 | 93.1 | 92.5 | 90.2 |
| | 20C / 0.1C | % | 79.3 | 89.3 | 88.8 | 85.5 |
| 475°C | 0.1C Discharge | mAh / g | 171.1 | 168.5 | 167.7 | 164.5 |
| | 10C / 0.1C | % | 89.5 | 92.8 | 91.9 | 89.2 |
| | 20C / 0.1C | % | 79.3 | 85.7 | 84.7 | 80.1 |
| 500°C | 0.1C Discharge | mAh / g | 171.1 | 168.7 | 167.8 | 163.9 |
| | 10C / 0.1C | % | 89.5 | 92.8 | 91.0 | 88.1 |
| | 20C / 0.1C | % | 79.3 | 85.5 | 84.3 | 78.3 |
| 525°C | 0.1C Discharge | mAh / g | 171.1 | 167.5 | 166.4 | 163.5 |
| | 10C / 0.1C | % | 89.5 | 88.5 | 88.4 | 86.7 |
| | 20C / 0.1C | % | 79.3 | 80.1 | 77.2 | 74.4 |
| 550°C | 0.1C Discharge | mAh / g | 171.1 | 165.5 | 164.4 | 162.9 |
| | 10C / 0.1C | % | 89.5 | 88.1 | 87.1 | 86.7 |
| | 20C / 0.1C | % | 79.3 | 79.1 | 76.3 | 74.3 |

As set forth hereinabove, according to one or more embodiments of the present disclosure, a lithium titanium composite oxide including aluminum-coated primary particles according to an embodiment is manufactured as the primary particles are coated with aluminum by mixing an aluminum compound with particles re-pulverized after preparation of a lithium titanium oxide and then by spray-drying the mixture again, such that a battery including the lithium titanium composite oxide including the aluminum-coated primary particles according to an embodiment exhibits effects of suppressing electrolyte decomposition and gas generation that may be respectively caused by titanium ions and residual lithium in conventional lithium titanium composite oxides.

While the inventive concept has been described with reference to exemplary embodiments, it will be apparent to those skilled in the art that various changes and modifications may be made without departing from the spirit and scope of the inventive concept. Therefore, it should be understood that the above embodiments are not limiting, but illustrative.

## Claims

1. A lithium titanium composite oxide comprising aluminum-coated primary particles.

2. The lithium titanium composite oxide of claim 1, wherein the lithium titanium composite oxide is a secondary particle formed by agglomeration of a plurality of primary particles, and
a size of the secondary particle is in a range from 7 to 20 µm.

3. The lithium titanium composite oxide of claim 1, wherein the lithium titanium composite oxide has a residual lithium in an amount less than or substantially equal to 2,000 ppm.

4. The lithium titanium composite oxide of claim 1, wherein the lithium titanium composite oxide has an intensity of a rutile-type titanium dioxide peak within 3 % with respect to an LTO main peak.

5. The lithium titanium composite oxide of claim 1, wherein the lithium titanium composite oxide has an intensity of an anatase-type titanium dioxide peak within 1 % with respect to an LTO main peak.

6. The lithium titanium composite oxide of claim 1, wherein particle size distribution of the lithium titanium composite oxide varies according to application of ultrasonic waves.

7. The lithium titanium composite oxide of claim 1, wherein a secondary particle of the lithium titanium composite oxide is changed into a primary particle during manufacturing of an electrode.

8. An electrode for a lithium secondary battery, comprising the lithium titanium composite oxide according to any one of claims 1 to 7.

9. The electrode of claim 8, wherein the electrode comprises primary particles, pulverized from the secondary particle of the lithium titanium composite oxide, which have a D50 in a range from 1.0 to 4.0 µm.

10. A method for manufacturing a lithium titanium composite oxide including aluminum-coated primary particles, the method comprising:
i) mixing, in a solid state, a lithium-containing compound, a titanium oxide, and a dissimilar metal compound in a stoichiometric ratio;
ii) manufacturing a slurry by dispersing the solid mixture of i) in a solvent and performing wet pulverizing until particles having an average particle diameter in a range from 0.1 µm to 0.2 µm are formed;
iii) spray-drying the slurry to form particles;
iv) plasticizing the spray-dried particles;
v) pulverizing the plasticized particles;
vi) manufacturing a slurry by dispersing a mixture of the pulverized particles and an aluminum compound in a solvent and pulverizing the dispersed mixture;
vii) performing spray-drying; and
viii) performing heat treatment.

11. The method for manufacturing a lithium titanium composite oxide including aluminum-coated primary particles of claim 10, wherein the dissimilar metal compound is a zirconium compound.

12. The method for manufacturing a lithium titanium composite oxide including aluminum-coated primary particles of claim 10, wherein the aluminum compound is an aluminum sulfate.

13. The method for manufacturing a lithium titanium composite oxide including aluminum-coated primary particles of claim 10, wherein in plasticizing the spray-dried particles, heat treatment is performed for 10 to 20 hours at a temperature in a range from 700 to 800°C.

14. The method for manufacturing a lithium titanium composite oxide including aluminum-coated primary particles of claim 10, wherein in performing heat treatment, heat treatment is performed for 10 to 20 hours at a temperature in a range from 400 to 500°C.
